# FASCICULE DE BREVET EUROPEEN

(11) **EP 1 079 215 B1**
(45) Date de publication et mention de la délivrance du brevet: **29.12.2004**
(21) Numéro de dépôt: 00402321.4
(22) Date de dépôt: 21.08.2000
(51) Int. Cl.: G01J 3/18

(54) **Instrument de spectrométrie infrarouge à haute résolution**
Hochauflösendes Instrument für Infrarotspektroskopie
High resolution infrared spectroscopic instrument

(30) Priorité: 26.08.1999 FR 9910802
(43) Date de publication de la demande: 28.02.2001
(73) Titulaire: ALCATEL, 75008 Paris (FR)
(72) Inventeur: Viard, Thierry, 06210 Mandelieu (FR)
(74) Mandataire: Smith, Bradford Lee

(56) Documents cités:
- EP-A- 0 780 669
- US-A- 4 591 266
- US-A- 5 182 609
- US-A- 5 276 321
- US-A- 5 420 681
- US-A- 5 644 396

## Description

L'invention concerne un instrument de spectrométrie infrarouge à haute résolution et plus particulièrement un instrument de spectrométrie réalisé sous une forme la plus compacte possible pour pouvoir être embarqué dans un satellite.

Comme il est connu de tels instruments de spectrométrie sont plus particulièrement exploités à des fins de sondage spectral météorologique. Ils doivent alors avoir une grande pupille d'entrée pour être à même de compenser la forte dilution spectrale de l'énergie mesurée et pour permettre d'obtenir un rapport signal/bruit exploitable.

Il existe d'importantes contraintes en matière d'encombrement et de masse, dès que ces instruments sont destinés à être embarqués sur des satellites et les spécifications pour des instruments de ce genre sont alors réellement sévères.

Ainsi, un instrument de spectrométrie embarqué sur un satellite, doit par exemple avoir un rapport focale/diamètre le plus proche possible de 1 et un encombrement en longueur de l'ordre de la focale, tout en étant performant et donc peu aberrant. Il est par ailleurs préférable qu'il ne comporte que peu d'éléments optiques, ceux-ci devant préférablement être robustes et simples.

Or les instruments de spectrométrie infrarouge à haute résolution, qui sont connus, sont en général des instruments passablement volumineux comportant un nombre relativement élevé d'éléments, tant au niveau de la partie collecteur de flux, habituellement constituée par un télescope axial de type cassegrain, qu'au niveau de la partie spectromètre généralement constituée par un très encombrant montage de type litthrow.

L'invention a donc pour objet un instrument de spectrométrie infrarouge à haute résolution et haute performance, conçu de manière à être simple, compact et de faible masse, notamment pour faciliter son embarquement à bord d'un satellite.

L'instrument comporte un miroir collecteur parabolique transmettant le flux qui lui parvient au travers d'une pupille d'entrée vers une fente d'entrée d'un spectromètre où ce flux est envoyé vers un détecteur infrarouge par l'intermédiaire d'un second miroir parabolique rendant le flux incident collimaté et d'un réseau de diffraction réalisé sur la surface réfléchissante d'un miroir focalisateur.

Selon une caractéristique de l'invention, l'instrument comporte un système correcteur dioptrique qui est interposé entre le réseau de diffraction et le détecteur et qui est optiquement déterminé, de manière connue en soi, pour assurer un complément de focalisation et un télécentrage du flux transmis au détecteur depuis le réseau de diffraction.

Selon une caractéristique relative à une forme préférée de réalisation d'un instrument selon l'invention, ledit réseau de diffraction est incliné, de préférence aux alentours de 45° dans le sens de la dispersion spectrale afin d'obtenir un grandissement anamorphique de la focale ainsi quie de la taille des détecteurs dans l'axe de la dispersion, qui est l'axe qui contient beaqcoup de pixels Ce montage préféré permet donc de dimunuer la taille du plan focal dans sa grande dimension et dans un rapport de 1/cos (angle d'inclinaison du réseau).

Selon une autre caractéristique relative à une forme préférée de réalisation d'un instrument selon l'invention, le système correcteur est réalisé en un matériau transparent dans l'infrarouge et préférentiellement dans le domaine visible, par exemple en ZnSe.

Selon une forme préférée de réalisation, l'instrument de spectrométrie comporte un miroir primaire, parabolique et décentré, focalisant un flux lui parvenant par une pupille d'entrée de l'instrument sur une fente d'entrée d'un spectromètre, un miroir secondaire, parabolique, décentré et confocal avec le miroir primaire qui lui envoie, au travers de la fente d'entrée, le flux qui lui est parvenu, un réseau de diffraction, gravé sur un miroir tertiaire asphérique qui reçoit le flux réfléchi par le miroir secondaire sous la forme d'un faisceau parallèle et qui assure une focalisation des rayonnements diffractés par le réseau et leur transmission à un détecteur infrarouge, et un système correcteur, dioptrique, qui est interposé entre le réseau de diffraction et le détecteur et qui est optiquement déterminé, de manière connue en soi, pour assurer une part importante de la focalisation conjointement avec le miroir tertiaire et un télécentrage du faisceau transmis au détecteur depuis le réseau de diffraction.

Selon une forme de réalisation de l'invention, le système correcteur est constitué par une lentille asphérique asymétrique excentrée par rapport au réseau.

Selon une autre forme de réalisation de l'invention, le système correcteur est constitué d'au moins deux lentilles asphériques faiblement excentrées par rapport au réseau.

L'invention, ses caractéristiques et ses avantages sont précisés dans la description qui suit en liaison avec les figures évoquées ci-dessous.
La figure 1 est une représentation schématique d'une première variante instrument de spectrométrie infrarouge selon l'invention.
La figure 2 présente un détail relatif à une variante de réalisation d'instrument de spectrométrie infrarouge, selon l'invention.

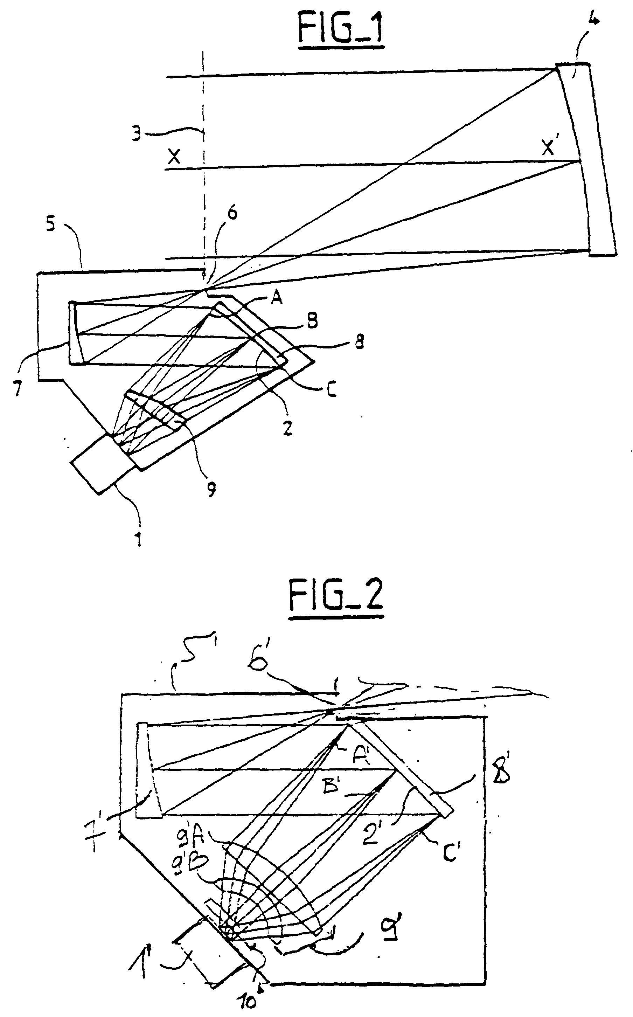

Le schéma d'instrument de spectrométrie infrarouge présenté sur la figure 1 est plus particulièrement celui d'un instrument pour lequel une haute résolution spectrale et une grande compacité sont recherchées. Un tel instrument est par exemple prévu pour pouvoir être embarqué à bord d'un satellite et en particulier d'un satellite météorologique, ce qui conduit à ce qu'il soit réalisé de manière la plus simple et fiable possible, pour éliminer au maximum les possibilités de dysfonctionnement et limiter sa masse, comme cela est habituel en matière de matériel satellisé.

L'instrument de spectrométrie infrarouge selon l'invention est essentiellement constitué d'un détecteur infrarouge 1 qui reçoit un faisceau à analyser par l'intermédiaire d'un réseau de diffraction 2, réalisé sur un miroir focalisateur, lui-même éclairé par l'intermédiaire d'un télescope afocal. Le détecteur infrarouge est supposé être un détecteur classique, dont la constitution n'est pas détaillée ici dans la mesure où elle ne constitue pas l'objet de l'invention. Un tel détecteur 1 couvre par exemple un domaine spectral allant de 4333 nm à 5490 nm.

Dans un exemple non-limitatif de réalisation, le télescope a une focale de l'ordre de 210 mm et une pupille d'entrée 3 de l'ordre de 180 mm.

Un miroir primaire parabolique 4 est positionné pour recevoir le flux transmis par la pupille d'entrée 3 du télescope et pour le réfléchir vers un spectromètre 5.

A cet effet, il est décentré par rapport à l'axe focal XX' de la pupille, comme montré sur la figure 1 et il focalise le flux qu'il reçoit vers une fente d'entrée 6 que comporte le spectromètre 5, cette fente étant ici supposée disposée perpendiculairement au plan de la feuille portant la figure 1.

Dans l'exemple de réalisation illustré, le flux traversant la fente d'entrée 6 est reçu sur un miroir secondaire parabolique 7, installé à l'intérieur d'un boîtier où le spectromètre est logé. Ce miroir secondaire est monté confocal avec le miroir primaire de manière qu'il n'y ait pas génération d'aberration au centre du champ et il est décentré pour pouvoir renvoyer le flux reçu, via la fente d'entrée 6, vers un miroir tertiaire asphérique 8 sur lequel le réseau de diffraction 2 est gravé. Le réseau de diffraction sépare, en fonction de leurs longueurs d'ondes respectives, les composantes du faisceau qu'il reçoit en provenance du miroir secondaire, ceci étant schématisé par trois rayons obtenus pour trois longueurs d'onde différentes pour chacun des trois points A, B, C respectivement choisis aux deux extrémités du réseau et au centre de ce réseau dans un plan médian de l'instrument. Ce plan est ici supposé confondu avec le plan de la feuille qui porte les dessins. La courbure donnée au miroir tertiaire 8 tend à focaliser les différents rayons diffractés par le réseau de diffraction 2, comme schématisé sur la figure 1.

Comme il est connu l'obtention d'une forte focalisation n'est pas aisée à obtenir matériellement avec un miroir et elle tend à augmenter les aberrations et la sensibilité au désalignement. Ceci conduit donc à chercher à limiter à une valeur modérée la focalisation assurée par le miroir tertiaire 8, sur lequel est réalisé le réseau de diffraction 2.

A cet effet, il est donc prévu d'insérer un système correcteur 9 entre le détecteur 1 et le réseau de diffraction 2 que porte le miroir tertiaire 8. Ce système correcteur 9 a pour fonction d'augmenter la focalisation, d'assurer un télécentrage du faisceau qui est envoyé au détecteur par le réseau de diffraction et de corriger les aberrations résiduelles.

Dans une forme préférée de réalisation, la focalisation réalisée par l'ensemble miroir tertiaire/système correcteur est majoritairement assurée par le système correcteur 9, ce qui a pour avantage de faciliter la réalisation du réseau de diffraction 2 sur le miroir tertiaire 8 et l'obtention de bonnes performances

Le télécentrage est obtenu par l'action du système correcteur dioptrique qui a pour fonction d'assurer une incidence identique, au niveau du détecteur infrarouge 1, ou éventuellement d'un filtre intermédiaire, pour tous les rayons diffractés en un point quelconque du réseau de diffraction, quelles que soient les longueurs d'onde de ces rayons dans le spectre pris en compte par l'appareil. Ceci est schématisé par le parallélisme des rayons trois par trois, par provenance, entre le système de correction 9 et le détecteur 1 sur la figure 1.

Dans l'exemple envisagé sur la figure 1, le système correcteur 9 est réalisé sous la forme d'une lentille asphérique asymétrique dont l'allure du profil est montrée.

Cette lentille est obtenue par une découpe désaxée réalisée au niveau d'une lentille sphérique et elle est montée excentrée par rapport au réseau de diffraction 2.

Dans l'exemple schématisé sur la figure 2, un système correcteur 9' est constitué à l'aide de deux lentilles asphériques 9'A, 9'B dont les profils respectifs sont également montrés. Ces lentilles peuvent être montées faiblement excentrées par rapport au réseau de diffraction.

Ce système correcteur 9' est associé à un ensemble d'éléments, tels qu'un miroir secondaire 7', un miroir tertiaire 8' portant un réseau de diffraction 2' et un détecteur 1' qui correspondent fonctionnellement aux éléments 7, 8, 2 et 1 schématisés sur la figure 1. Un filtre intermédiaire 10' est par ailleurs schématisé sur la figure 2 entre le système correcteur 9' et le détecteur 1'.

Comme il est connu, la détermination point par point de lentilles, telles que les lentilles 9, 9'A et 9'B, est actuellement obtenue par mise en oeuvre de programmes informatiques, spécialisés et connus, de commande numérique qui permettent de déterminer une lentille point par point à partir des différents chemins optiques possibles, soit donc dans le cas présent entre les différents chemins susceptibles d'être suivis entre le réseau de diffraction 2 ou 2' et le détecteur 1 ou 1' pour les différentes longueurs d'onde du spectre pris en compte.

De tels programmes permettent de déterminer en conséquence les incidences à respecter et les épaisseurs de matière au niveau d'une lentille, cette dernière étant alors susceptible d'être directement produite par une machine spécialisée.

Dans l'exemple de réalisation envisagé ci-dessus, les lentilles doivent bien entendu être réalisées en un matériau transparent aux rayonnements infrarouges compris dans le spectre de mesure, elle peut par exemple être réalisée en un matériau tel que du germanium ou du silicium.

Dans une forme préférée de réalisation, les lentilles sont réalisées en un matériau transparent dans le domaine de l'infrarouge visé et dans le domaine du visible, tel que par exemple du ZnSe. Ceci permet d'assurer un alignement visuel des composants de l'instrument, en utilisant un faisceau lumineux, lors du montage de ce dernier et donc de rendre beaucoup plus simple et facile cet alignement.

## Revendications

1. Instrument de spectrométrie infrarouge à haute résolution comportant un télescope afocal transmettant le flux qui lui parvient au travers d'une pupille d'entrée (3) vers une fente d'entrée d'un spectromètre (5) où ce flux est envoyé vers un détecteur infrarouge (1) par l'intermédiaire d'un réseau de diffraction (2) réalisé sur la surface réfléchissante d'un miroir focalisateur (8), **caractérisé en ce qu'**il comporte un système correcteur dioptrique (9) qui est interposé entre le réseau de diffraction et le détecteur et qui est optiquement déterminé, pour assurer un complément de focalisation, un télécentrage du faisceau transmis au détecteur depuis le réseau de diffraction et une correction des aberrations résiduelles.

2. Instrument, selon la revendication 1, dans lequel ledit réseau de diffraction est incliné, de préference aux alentours de 45° dans le sens de la dispersion spectrale afin d'obtenir un grandissement anamorphique de la focale.

3. Instrument, selon la revendication 1 ou 2, dont le système correcteur (9) est réalisé en un matériau transparent dans l'infrarouge et dans le domaine visible.

4. Instrument selon au moins l'une des revendications 1 à 3, dans lequel le système correcteur (9) est réalisé en ZnSe.

5. Instrument selon au moins l'une des revendications 1 à 4, **caractérisé en ce qu'**il comporte un miroir primaire (4), parabolique et décentré, focalisant un flux lui parvenant par la pupille d'entrée (3) de l'instrument sur la fente d'entrée (6) du spectromètre (5), un miroir secondaire (7), parabolique, décentré et confocal avec le miroir primaire qui lui envoie, au travers de la fente d'entrée, le flux qui lui est parvenu, ledit réseau de diffraction (2), étant gravé sur un miroir tertiaire (8) asphérique qui reçoit le flux réfléchi par le miroir secondaire sous la forme d'un faisceau parallèle et qui assure une focalisation des rayonnements diffractés par le réseau et leur transmission à un détecteur infrarouge (1), et ledit système correcteur dioptrique (9), constitué d'une lentille asphérique asymétrique qui est excentrée par rapport au réseau de diffraction (2), interposée entre ce réseau de diffraction et le détecteur et optiquement déterminée, pour assurer l'essentiel de la focalisation assurée conjointement avec le miroir tertiaire, ainsi qu'un télécentrage du faisceau transmis au détecteur depuis le réseau de diffraction et une correction des aberrations résiduelles.

6. Instrument selon au moins l'une des revendications 1 à 4, **caractérisé en ce qu'**il comporte un miroir primaire (4), parabolique et décentré, focalisant un flux lui parvenant par la pupille d'entrée (3) de l'instrument sur la fente d'entrée (6) du spectromètre (5), un miroir secondaire (7), parabolique, décentré et confocal avec le miroir primaire qui lui envoie, au travers de la fente d'entrée, le flux qui lui est parvenu, ledit réseau de diffraction (2), étant gravé sur un miroir tertiaire (8) asphérique qui reçoit le flux réfléchi par le miroir secondaire sous la forme d'un faisceau parallèle et qui assure une focalisation des rayonnements diffractés par le réseau et leur transmission à un détecteur infrarouge (1), et ledit système correcteur dioptrique (9), qui est constitué d'au moins deux lentilles asphériques, interposées entre ce réseau de diffraction et le détecteur, ainsi que faiblement excentrées, et qui est optiquement déterminé, pour assurer l'essentiel de la focalisation assurée conjointement avec le miroir tertiaire, ainsi qu'un télécentrage du faisceau transmis au détecteur depuis le réseau de diffraction et une correction des aberrations résiduelles.

## Patentansprüche

1. Hochauflösendes Instrument für Infrarotspektroskopie, umfassend ein afokales Teleskop, welches den bei ihm durch eine Eintrittspupille (3) ankommenden Lichtstrom zu einem Eintrittsspalt eines Spektrometers (5) überträgt, wo dieser Lichtstrom zu einem Infrarotdetektor (1) gesendet wird, und zwar über ein Beugungsgitter (2), das auf der reflektierenden Oberfläche eines Fokussierspiegels (8) hergestellt ist, **dadurch gekennzeichnet, dass** es ein dioptrisches Korrektursystem (9) umfasst, das zwischen dem Beugungsgitter und dem Detektor angeordnet ist und das optisch so festgelegt ist, dass es eine Fokussierungsergänzung, eine Fernzentrierung des vom Beugungsgitter an den Detektor übertragenen Bündels und eine Korrektur der Restaberration durchführt.

2. Instrument nach Anspruch 1, bei dem das Beugungsgitter vorzugsweise um etwa 45° in Richtung der Dispersion des Spektrums geneigt ist, um eine anamorphische Vergrößerung der Brennweite zu erzielen.

3. Instrument nach Anspruch 1 oder 2, bei dem das Korrektursystem (9) aus einem im Infrarot- und im sichtbaren Bereich transparenten Werkstoff hergestellt ist.

4. Instrument nach mindestens einem der Ansprüche 1 bis 3, bei dem das Korrektursystem aus ZnSe hergestellt ist.

5. Instrument nach mindestens einem der Ansprüche 1 bis 4, **dadurch gekennzeichnet, dass** es umfasst: einen parabolischen und dezentrischen Primärspiegel (4), der einen Lichtstrom fokussiert, welcher bei ihm durch die Eintrittspupille (3) des Instruments auf dem Eintrittsspalt (6) des Spektrometers (5) ankommt; einen parabolischen, dezentrischen Sekundärspiegel (7), der konfokal mit dem Primärspiegel ist, welcher ihm durch den Eintrittsspalt den bei ihm angekommenen Lichtstrom sendet, wobei das Beugungsgitter (2) auf einem asphärischen Tertiärspiegel (8) eingeritzt ist, der den vom Sekundärspiegel in Form eines parallelen Bündels reflektierten Lichtstrom empfängt und der für eine Fokussierung der vom Gitter gebeugten Strahlungen und für ihre Übertragung an einen Infrarotdetektor (1 ) sorgt; und das dioptrische Korrektursystem (9), bestehend aus einer asphärischen asymmetrischen Linse, die gegenüber dem Beugungsgitter (2) exzentrisch ist und die zwischen diesem Beugungsgitter und dem Detektor angeordnet ist und optisch so festgelegt ist, dass sie den wesentlichen Teil der Fokussierung übernimmt, die gemeinsam mit dem Tertiärspiegel durchgeführt wird, sowie eine Fernzentrierung des Bündels, das vom Beugungsgitter an den Detektor übertragen wird, und eine Korrektur der Restaberrationen.

6. Instrument nach mindestens einem der Ansprüche 1 bis 4, **dadurch gekennzeichnet, dass** es umfasst: einen parabolischen und dezentrischen Primärspiegel (4), der einen Lichtstrom fokussiert, welcher bei ihm durch die Eintrittspupille (3) des Instruments auf dem Eintrittsspalt (6) des Spektrometers (5) ankommt; einen parabolischen, dezentrischen Sekundärspiegel (7), der konfokal mit dem Primärspiegel ist, welcher ihm durch den Eintrittsspalt den bei ihm angekommenen Lichtstrom sendet, wobei das Beugungsgitter (2) auf einem asphärischen Tertiärspiegel (8) eingeritzt ist, der den vom Sekundärspiegel in Form eines parallelen Bündels reflektierten Lichtstrom empfängt und der für eine Fokussierung der vom Gitter gebeugten Strahlungen und für ihre Übertragung an einen Infrarotdetektor (1) sorgt; und das dioptrische Korrektursystem (9), bestehend aus mindestens zwei asphärischen Linsen, die zwischen diesem Beugungsgitter und dem Detektor angeordnet sowie leicht exzentrisch sind, wobei das Korrektursystem optisch so festgelegt ist, dass es den wesentlichen Teil der Fokussierung übernimmt, die gemeinsam mit dem Tertiärspiegel durchgeführt wird, sowie eine Fernzentrierung des Bündels, das vom Beugungsgitter an den Detektor übertragen wird, und eine Korrektur der Restaberrationen.

## Claims

1. A high resolution infrared spectrometer instrument comprising an afocal telescope transmitting the flux that reaches it through an entrance pupil (3) towards an entrance slot of a spectrometer (5) where said flux is sent towards an infrared detector (1) via a diffraction grating (2) made on the reflecting surface of a focusing mirror (8), the instrument being **characterized in that** it includes a refracting corrector system (9) which is interposed between the diffraction grating and the detector and which is optically defined to provide additional focusing, remote centering of the beam transmitted to the detector from the diffraction grating, and correction of residual aberrations.

2. An instrument according to claim 1, in which said diffraction grating is inclined, preferably at about 45° to the spectral dispersion direction, in order to obtain anamorphic magnification of the focal length.

3. An instrument according to claim 1 or claim 2, in which the corrector system (9) is made of a material that is transparent in the infrared and in the visible range.

4. An instrument according to any one of claims 1 to 3, in which the corrector system (9) is made of ZnSe.

5. An instrument according to any one of claims 1 to 4, **characterized in that** it comprises a primary mirror (4) that is parabolic and off-center, focusing a flux reaching it via the entrance pupil (3) of the instrument onto the entrance slot (6) of the spectrometer (5), a secondary mirror (7) that is parabolic, off-center, and confocal with the primary mirror and that sends thereto, through the entrance slot, the flux that has reached it, said diffraction grating (2) being etched on a tertiary mirror (8) that is aspherical that receives the flux reflected by the secondary mirror in the form of a parallel beam, and that focuses the radiation diffracted by the grating and transmits it to an infrared detector (1), and said refracting corrector system (9) constituted by an asymmetrical aspherical lens that is off-center relative to the diffraction grating (2), being interposed between said diffraction grating and the detector and being optically designed to perform the majority of the focusing provided together with the tertiary mirror, and also to provide remote centering of the beam transmitted to the detector from the diffraction grating, and to correct residual aberrations.

6. An instrument according to any one of claims 1 to 4, **characterized in that** it comprises a primary mirror (4) that is parabolic and off-center, focusing a flux reaching it via the entrance pupil (3) of the instrument onto the entrance slot (6) of the spectrometer (5), a secondary mirror (7) that is parabolic, off-center, and confocal with the primary mirror and that sends thereto, through the entrance slot, the flux that has reached it, said diffraction grating (2) being etched on a tertiary mirror (8) that is aspherical that receives the flux reflected by the secondary mirror in the form of a parallel beam, and that focuses the radiation diffracted by the grating and transmits it to an infrared detector (1), and said refracting corrector system (9), which is constituted by at least two aspherical lenses interposed between the diffraction grating and the detector, and slightly off-center, and which is optically designed to perform the majority of the focusing provided together with the tertiary mirror, and also to provide remote centering of the beam transmitted to the detector from the diffraction grating, and to correct residual aberrations.
